# EUROPEAN PATENT APPLICATION

(11) **EP 2 592 884 A1**
(43) Date of publication of application: **15.05.2013**
(21) Application number: 11306473.7
(22) Date of filing: 14.11.2011
(51) Int. Cl.: H04W 60/00, H04W 60/04

(54) **Location update in a multi-radio access technology mobile system**

(71) Applicant: Alcatel Lucent, 75007 Paris (FR)
(72) Inventor: Casati, Alessio, Wiltshire, SN5 5BG (GB); Palat, Sudeep, Wiltshire, SN5 6EE (GB)
(74) Representative: El Manouni, Josiane

(57) **Abstract**

Embodiments of the present invention include a method for location update in a multi-Radio Access Technology RAT mobile system wherein an User Equipment UE can be registered over multiple RATs with multiple Core Network CN nodes, a method wherein, if authorized for said UE, location information stored for said UE in a subscriber database of said system indicates which of said multiple CN nodes is currently serving said UE.

## Description

The present invention generally relates to mobile communication networks and systems.

Detailed descriptions of mobile communication networks and systems can be found in the literature, in particular in Technical Specifications published by standardization bodies such as in particular 3GPP (3^{rd} Generation Partnership Project).

An example of 3GPP system is EPS (Evolved Packet System), specified in particular in 3GPP TS 23.401.

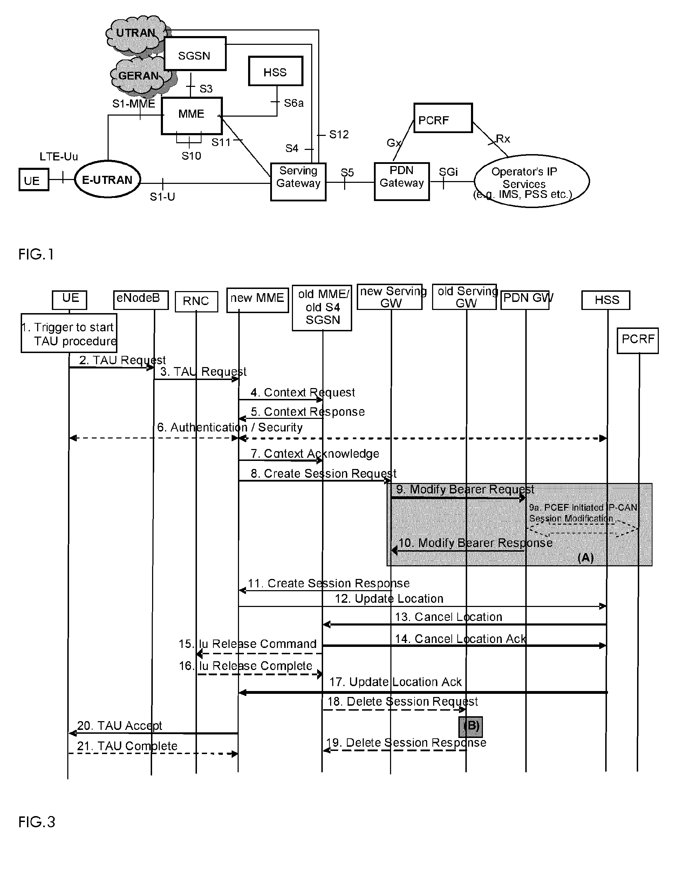

An example of architecture for EPS is recalled in figure 1, taken from 3GPP TS 23.401. EPS provides IP connectivity services to User Equipments UE. EPS comprises EPC (Evolved Packet Core) that can be accessed by different Access Networks, including 3GPP Radio Access Networks having different Radio Access Technology RAT, such as in particular E-UTRAN and UTRAN/GERAN.

EPC comprises, in particular:
- EPC nodes, such as in particular MME (Mobility Management Entity) interfacing with E-UTRAN, and SGSN (Serving GPRS Support Node) interfacing with GERAN/UTRAN,
- a subscriber database HSS (Home Subscriber Server), interacting in particular with EPC nodes such as MME/SGSN.

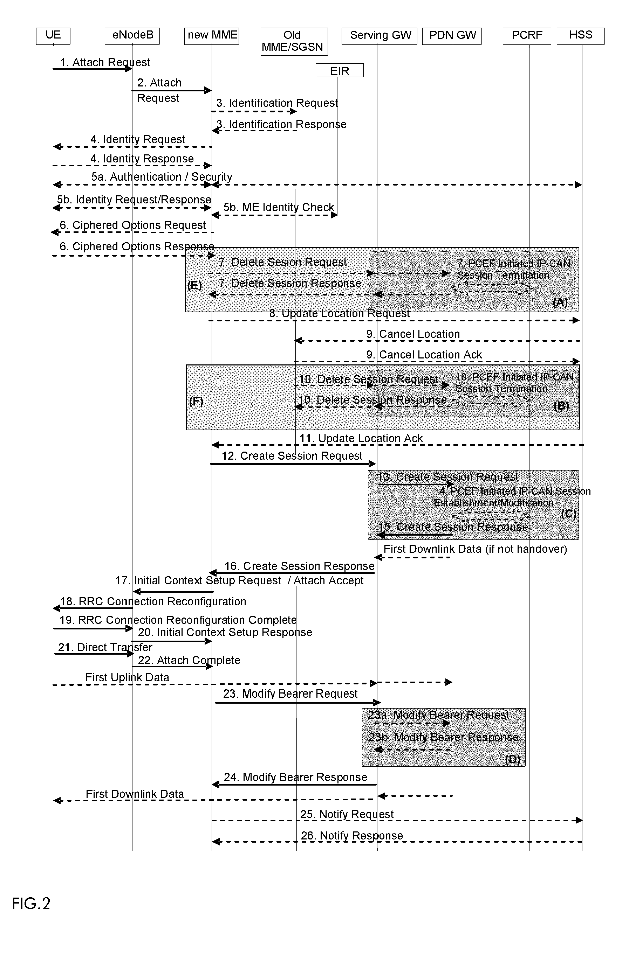

UE, MME/SGSN and HSS interact together, in particular during procedures such as Attach procedure (as recalled in figure 2 taken from 3GPP TS 23.401), Tracking Area Update procedure (as recalled in figure 3 taken from 3GPP TS 23.401), and Routing Area procedure (not specifically illustrated). In particular, during said procedures:
- UE sends a location update request to MME/SGSN (Attach Request sent to MME as recalled in figure 2, or Tracking Area Update TAU Request sent to MME as recalled in figure 3, or Routing Area Update RAU Request sent to SGSN),
- MME/SGSN in turn sends a location update request towards HSS (Update Location Request as recalled in the figures).

As a result of such procedures, MME/SGSN registration is performed for said UE, and corresponding location information (in the form of MME/SGSN identity or address) is stored in the HSS for said UE.

As recognized by the inventor, and as will be explained with more detail later, there is a need for improved location update in a multi-RAT mobile system such as for example EPS. In particular, new types of mobile-terminated services may be introduced in such systems, requiring precise knowledge of the CN node with which the UE is registered, which is currently serving the UE. There is also a need to improve service delivery in such systems, in particular to offer such new types of mobile-terminated services.

Embodiments of the present invention in particular addresses such needs.

These and other objects are achieved, in one aspect, by a method for location update in a multi-Radio Access Technology RAT mobile system wherein an User Equipment UE can be registered over multiple RATs with multiple Core Network CN nodes.

In an embodiment, if authorized for said UE, location information stored for said UE in a subscriber database of said system indicates which of said multiple CN nodes is currently serving said UE.

These and other objects are achieved, in other aspects, by entities for performing such method, said entities including, in particular mobile Core Network CN nodes (such as in particular Mobility Management Entity MME and Serving GPRS Support Node SGSN, for EPS), and mobile network subscriber database (such as in particular Home Subscriber Server HSS, for EPS).

These and other objects are achieved, in other aspects, by a multi-Radio Access Technology mobile system, comprising at least one such Core Network node and/or subscriber database.

Some embodiments of apparatus and/or methods in accordance with embodiments of the present invention are now described, by way of example only, and with reference to the accompanying drawings, in which:
- Figure 1 is intended to recall an example of architecture for EPS,
- Figure 2 is intended to recall the Attach procedure in EPS,
- Figure 3 is intended to recall the Tracking Area update procedure in EPS,
- Figure 4 is intended to illustrate in a simplified way, and based on an example, location update in a multi-RAT system such as for example EPS, not using embodiments of the present invention,
- Figure 5 is intended to illustrate in a simplified way, and based on an example, location update in a multi-RAT system such as for example EPS, using embodiments of the present invention.

Embodiments of the present invention will more particular be described, by way of example, for the case of EPS. However, the present invention is not limited to such case.

In some multi-technology also known as Multi-RAT or Multi Radio Access Technologies) cellular systems , for instance the Evolved Packet system (EPS) standardized by 3GPP, the Terminal (also referred to as UE standing for User equipment) can be registered simultaneously over multiple RAT's, meaning that the Home Location register(HLR)/Home Subscriber Server(HSS) may not be aware of what is the serving core network node where the UE is located (assuming the different RAT's may be served by different core network nodes). If this is the case, for Mobile terminated services where the HSS is supposed to mprovide routing functionality, it is not possible to know in advance in which specific serving node the Ue (e.g. whether the UE is with an SGSN or an MME in case of the EPS) is, so this requires the HSS/HLR to provide the address of both and multiple attepts needs to be carried out (and possibly this may be subject to cause race conditions when the UE moved between accesses).

In the EPS, as specified in 3GPP TS 23.401: "if the MME has changed since the last detach, or if there is no valid subscription context for the UE in the MME, or if the ME identity has changed, or if the UE provides an IMSI or the UE provides an old GUTI which doesn't refer to a valid context in the MME, the MME sends an Update Location Request (MME Identity, IMSI, ME Identity, MME Capabilities, ULR-Flags, Homogeneous Support of IMS Over PS Sessions) message to the HSS" (step 8 in figure 2). As the UE moves from 2G/3G to EPS, the UE becomes EMM registered in the MME via a Tracking area update. To this the MME triggers a Location update (Step 12 in figure 3) to the HSS only under this condition (as specified in 3GPP TS 23.401):
"The new MME verifies whether it holds subscription data for the UE identified by the GUTI, the additional GUTI or by the IMSI received with the context data from the old CN node. If there are no subscription data in the new MME for this UE then the new MME sends an Update Location Request (MME Identity, IMSI, ULR-Flags, MME Capabilities, Homogeneous Support of IMS Over PS Sessions) message to the HSS. ULR-Flags indicates that update location is sent from an MME and the MME registration shall be updated in HSS. The HSS does not cancel any SGSN registration. The MME capabilities indicate the MME's support for regional access restrictions functionality. Homogenous Support of IMS Over PS Sessions indicates whether or not "IMS Voice over PS Sessions" is supported homogeneously in all TAs the serving MME."

So in principle there are circumstances under which the HSS has a dual registration in 2G/3G SGSN and EUTRAN as 1) the MME not always triggers a Location update when the UE issues a TAU and 2), even in case it does, the SGSN registration cannot be cancelled by the MME registration (while the LAU would update the old MME info with the new MME info, the same does not hold true for the SGSN information, which is retained in the HSS).

At present there is only the possibility to try to deliver the service in one node and then the other or simultaneously over them. This is inefficient.

In an embodiment, it is proposed that the serving nodes, based on but not limited to either subscription information, terminal capabilities, or visited network preference or any or all of these, can decide whether to update the HSS/HLR and provide an indication that they are the one in charge of serving the UE. This way as a UE moves from one serving node serving a RAT to one serving another, it will get reported to the HSS in such a way the HSS can exactly know e.g. whether, using the EPS as an example, the UE is served by an MME or an SGSN and which that is.

In an embodiment, when the HLR/HSS gets an update from another node with or without the indication that it is in charge of the UE, the HLR/HSS removes the marker from the old node so the HLR/HSS will no longer consider the UE is with the old node. The HLR/HSS may also do this on indication from the old MME that it is no longer in charge of this UE [This is to cater from HSS side for UE mobility to nodes that does not support this indication, if the HSS determines the UE subscribes to some set of services that benefit from indication of last known serving node]

In an embodiment, it may therefore be necessary , for a class of Mobile Terminated services (e.g. SMS natively supported in LTE Non access stratum signalling, which is still not possible at time of writing)
1) To make sure that the HSS is updated by an MME or SGSN all the time when the UE performs a TAU/RAU from another core node or an attach, when the IMSI subscribes to a class of MT (mobile terminated) services that require precise information on the serving node in the HSS and the UE capabilities signal support of these services.
2) That the MME/SGSN can in this case signal to the HSS in the location area update the need to mark it as the current/last known serving node for the UE and to just keep the SGSN/MME data stored but for other purposes than routing to the current serving node. This can also be achieved by local implementation if the HSS behaves like this regardless of signalling.

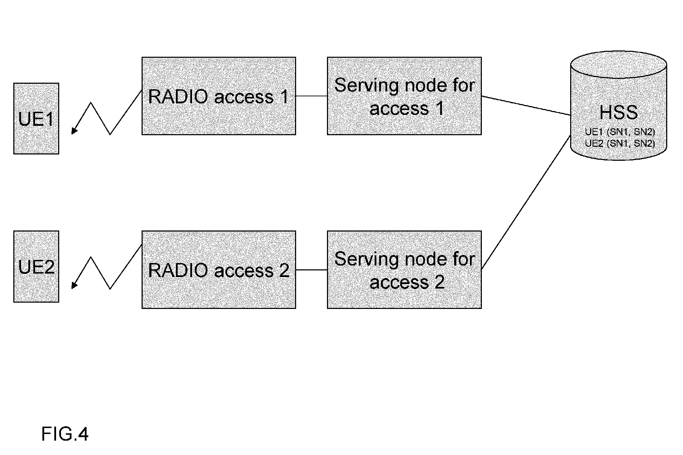

Figure 4 is intended to illustrate in a simplified way, and based on an example, location update in a multi-RAT system such as for example EPS, not using embodiments of the present invention.

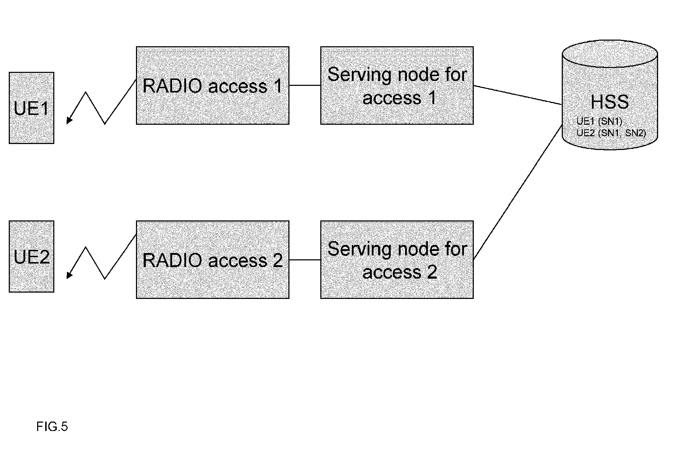

Figure 5 is intended to illustrate in a simplified way, and based on an example, location update in a multi-RAT system such as for example EPS, using embodiments of the present invention.

In the example illustrated in figures 4 and 5, an UE noted UE1 subscribes to MT services requiring routing information from HSS, while an UE noted UE2 does not subscribe to MT services requiring routing info from HSS.

In the example illustrated in figures 4 and 5, both UE1 and UE2 are dualregistered on both accesses (noted Radio Access 1 and Radio Access 2).

In the example illustrated in figure 4, HSS stores both last known serving nodes: Serving Node for Radio Access 1 (SN1) and Serving Node for Radio Access 2 (SN2), as serving nodes not always update HSS -e.g. if the UE was already registered in the serving node and it moves back into it from another technology providing a valid temporary identifier.

In the example illustrated in figure 5, HSS stores just current location (SN1) for UE1 as serving nodes always update location for UE1, but keeps both last known locations (SN1, SN2) for UE2 as serving node does not always update Location.

In one aspect, there is provided a method for location update in a multi-Radio Access Technology RAT mobile system wherein an User Equipment UE can be registered over multiple RATs with multiple Core Network CN nodes.

In an embodiment, if authorized for said UE, location information stored for said UE in a subscriber database of said system indicates which of said multiple CN nodes is currently serving said UE.

In an embodiment, said method comprises:
- if authorized for said UE, a CN node indicating to said subscriber database that said CN node is currently serving said UE.

In an embodiment, said method comprises:
- if authorized for said UE, a CN node indicating to said subscriber database that it is no longer serving said UE.

In an embodiment, said method comprises:
- if authorized for said UE, a CN node sending a location update request to said subscriber database any time it receives a location update request from said UE, without any other checking, thereby indicating that it is currently serving said UE.

In an embodiment, said method comprises:
- if authorized for said UE, upon reception of an indication that a CN node is currently serving said UE, said subscriber database marking said CN node, in the location information stored for said UE, as the one currently serving said UE.

In an embodiment, said method comprises:
- if authorized for said UE, upon reception of an indication that a CN node is currently serving said UE, said subscriber database deleting CN nodes other than said CN node, in the location information stored for said UE.

In an embodiment, said method comprises:
- if authorized for said UE, a CN node indicating to said subscriber database a need for marking said CN node as the one currently serving said UE, in the location information stored for said UE.

In an embodiment, said method comprises:
- upon reception from a CN node, of an indication of a need for marking said CN node as the one currently serving said UE, in the location information stored for said UE, said subscriber database marking said CN node as the one currently serving said UE in said location information.

In an embodiment, said method comprises:
- checking said authorization, by checking at least one of: UE subscription information, UE capabilities, UE visited network preference.

In an embodiment, said method comprises:
- checking said authorization, by checking if said UE has subscribed to Mobile Terminated services requiring routing information from said subscriber database.

In an embodiment, said method comprises:
- in Evolved Packet System EPS, said RATs include E-UTRAN and GERAN/UTRAN, said CN nodes include MME and SGSN, said subscriber database includes HSS, a location update request sent by a CN node to said subscriber database includes an Update Location Request sent from MME or SGSN to HSS, a location update request sent by UE to a serving CN node includes at least one of: Attach Request, Tracking Area Update Request, Routing Area Update Request.

Other aspects relate to entities comprising means for performing such method, said entities including, in particular mobile Core Network nodes (such as in particular Mobility Management Entity MME, and Serving GPRS Support Node SGSN, for EPS), and mobile network subscriber database (such as in particular Home Subscriber Server HSS, for EPS).

Other aspects relate to a multi-Radio Access Technology mobile system, comprising at least one such Core Network node and/or subscriber database.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for location update in a multi-Radio Access Technology RAT mobile system wherein an User Equipment UE can be registered over multiple RATs with multiple Core Network CN nodes, a method wherein, if authorized for said UE, location information stored for said UE in a subscriber database of said system indicates which of said multiple CN nodes is currently serving said UE.

2. A method according to claim 1, comprising:
- if authorized for said UE, a CN node indicating to said subscriber database that said CN node is currently serving said UE.

3. A method according to claim 1 or 2, comprising:
- if authorized for said UE, a CN node indicating to said subscriber database that it is no longer serving said UE.

4. A method according to any of claims 1 to 3, comprising:
- if authorized for said UE, a CN node sending a location update request to said subscriber database any time it receives a location update request from said UE, without any other checking, thereby indicating that it is currently serving said UE.

5. A method according to any of claims 1 to 4, comprising:
- if authorized for said UE, upon reception of an indication that a CN node is currently serving said UE, said subscriber database marking said CN node, in the location information stored for said UE, as the one currently serving said UE.

6. A method according to any of claims 1 to 5, comprising:
- if authorized for said UE, upon reception of an indication that a CN node is currently serving said UE, said subscriber database deleting CN nodes other than said CN node, in the location information stored for said UE.

7. A method according to any of claims 1 to 6, comprising:
- if authorized for said UE, a CN node indicating to said subscriber database a need for marking said CN node as the one currently serving said UE, in the location information stored for said UE.

8. A method according to any of claims 1 to 7, comprising:
- upon reception from a CN node, of an indication of a need for marking said CN node as the one currently serving said UE, in the location information stored for said UE, said subscriber database marking said CN node as the one currently serving said UE in said location information.

9. A method according to any of claims 1 to 8, comprising:
- checking said authorization, by checking at least one of: UE subscription information, UE capabilities, UE visited network preference.

10. A method according to any of claims 1 to 9, comprising:
- checking said authorization, by checking if said UE has subscribed to Mobile Terminated services requiring routing information from said subscriber database.

11. A method according to any of claims 1 to 10, wherein:
- in Evolved Packet System EPS, said RATs include E-UTRAN and GERAN/UTRAN, said CN nodes include MME and SGSN, said subscriber database includes HSS, a location update request sent by a CN node to said subscriber database includes an Update Location Request sent from MME or SGSN to HSS, a location update request sent by UE to a serving CN node includes at least one of: Attach Request, Tracking Area Update Request, Routing Area Update Request.

12. A Core Network node of a multi-RAT mobile system, comprising means for performing a method according to any of claims 1 to 11.

13. A subscriber database of a multi-RAT mobile system, comprising means for performing a method according to any of claims 1 to 11.

14. A multi-Radio Access Technology mobile system, comprising at least one Core Network node according to claim 12, and/or one subscriber database according to claim 13.
